**Europäisches Patentamt**

**European Patent Office**

**Office européen des brevets**

(19)

(11) Veröffentlichungsnummer: **0 134 021**
**B1**

(12) # EUROPÄISCHE PATENTSCHRIFT

(45) Veröffentlichungstag der Patentschrift:
25.11.87

(51) Int. Cl.⁴: **E 21 B 33/138, E 21 B 43/32**

(21) Anmeldenummer: **84109440.2**

(22) Anmeldetag: **08.08.84**

(54) **Verfahren zur Verminderung des Wasserzuflusses in Erdöl fördernden Sonden.**

(30) Priorität: **17.08.83 DE 3329605**

(43) Veröffentlichungstag der Anmeldung:
**13.03.85 Patentblatt 85/11**

(45) Bekanntmachung des Hinweises auf die Patenterteilung:
**25.11.87 Patentblatt 87/48**

(84) Benannte Vertragsstaaten:
**AT DE FR GB**

(56) Entgegenhaltungen:
**DE-B-1 025 806**
**US-A-2 211 688**
**US-A-3 208 524**
**US-A-4 031 958**
**US-A-4 039 029**
**US-A-4 157 322**

(73) Patentinhaber: **DEUTSCHE TEXACO AKTIENGESELLSCHAFT, Überseering 40, D-2000 Hamburg 60 (DE)**

(72) Erfinder: **Grodde, Karl- Heinz, Dr., Hodenbergstrasse 11, D-3100 Celle (DE)**
Erfinder: **Volz, Hartwig, Dr., Westcellerstorstrasse 15a, D-3100 Celle (DE)**

(74) Vertreter: **Schupfner, Gerhard D., Müller, Schupfner & Gauger Karlstrasse 5 Postfach 14 27, D-2110 Buchholz/Nordheide (DE)**

EP 0 134 021 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die vorliegende Erfindung bezieht sich auf ein Verfahren zur Verminderung des Wasserzuflusses in Erdöl fördernden Sonden und insbesondere zur Wasserabsperrung in Förderbohrungen durch Injizieren von wäßrigen Lösungen von Alginaten. Es ist besonders für Lagerstätten mit einem höheren Gehalt an zweiwertigen Kationen im Lagerstättenwasser geeignet.

Mit zunehmendem Alter von Erdölfeldern steigt der Wasseranteil in den produzierten Flüssigkeiten im Regelfall laufend an und erreicht schließlich so hohe Werte, daß aus Gründen der Wirtschaftlichkeit die Förderung eingestellt werden muß. Der Zufluß des Wassers zu den Fördersonden wird bedingt durch die Expansion des an das Erdölfeld angrenzenden Aquifers oder, bei Sekundärverfahren, durch Wasserinjektion in die Injektionsbohrungen.

Je nach Ausbildung der Lagerstätte kann man bezüglich des Wasserzuflusses und der zu dessen Verminderung anzuwendenden Methoden drei Fälle unterscheiden.

Fall 1:

In manchen Lagerstätten ist nur der obere Teil der Formation ölführend, der untere dagegen wasserführend; die Lagerstätte ist also von Bodenwasser unterlagert. Auch bei homogen permeablen Lagerstätten dringt das Wasser infolge seiner gegenüber dem Öl im Regelfall höheren Beweglichkeit in den unteren Schichten der Lagerstätte am schnellsten vor. Nach dem Wasserdurchbruch bildet sich ein Wasserkegel um die Fördersonde mit erhöhtem Öl/Wasser-Kontakt und dadurch bedingt schneller Zunahme der Verwässerung.

Fall 2:

Bei größerer Permeabilitätsinhomogenität der Lagerstätte tendiert das Wasser dazu, durch das meist viel höherviskose Öl hindurchzufingern. Nach dem Wasserdurchbruch in den Fördersonden fließt in diesen Schichten bald nur noch Wasser, während sich das Öl in den wenig permeablen Schichten bei kleinem Druckgefälle nur mit verringerter Geschwindigkeit bewegt. Auch hier kommt es zu einer schnellen Zunahme der Verwässerung der Sonden.

Fall 3:

Schließlich strömt das Wasser in den meisten Fällen nicht von allen Seiten zu den Fördersonden, sondern nach dem Wasserdurchbruch zunächst in einem kleinen Azimutbereich, der sich im Laufe der Förderzeit vergrößert.

In einer homogenen Schicht läßt sich das gleichzeitige Fließen von Wasser und Öl näherungsweise durch das Konzept des Mobilitätsverhältnisses beschreiben. Die Mobilität ist der Quotient aus Permeabilität k und Viskosität $\eta$ der betreffenden Phasen; das Mobilitätsverhältnis M wird häufig ausgedrückt als der Quotient der Wasser- und Ölmobilitäten, also:

$$M = \frac{k_{eff\,w}}{\eta^w} : \frac{k_{eff\,o}}{\eta^o} \quad (1)$$

mit $k_{eff\,w}$ = effektive Permeabilität für Wasser bei Restölgehalt;
$\eta^w$ Viskosität des Wassers;
$k_{eff\,o}$ = effektive Permeabilität für Öl bei Haftwassergehalt;
$\eta^o$ = Viskosität des Öls.

Ein Teil der bisher bekannten Verfahren bezieht sich auf die Absperrung von Bodenwasser (der oben erwähnte erste Fall). Beispielsweise kann der untere, wasserführende Teil der Formation zementiert oder durch Packer in den Steigrohren abgesperrt werden. Vorteilhafter sind Verfahren, durch die die Verstopfung des Porenraumes der wasserführenden Schichten bis zu einigen Metern in die Lagerstätte hinein erzielt wird. Zu diesem Zweck werden in den bodenwasserführenden Teil der Lagerstätte Flüssigkeiten injiziert, die nach einiger Zeit ein Gel bilden, wie beispielsweise Wasserglaslösungen, die durch Zusatz eines Elektrolyten wie Salzsäure oder Ammoniumchlorid nach bestimmter Inkubationszeit zu einem steifen Gel erstarren. Der Nachteil dieses Verfahrens besteht darin, daß bei Eindringen der zunächst dünnflüssigen Lösungen in ölführende Schichten auch diese abgedichtet und deren Zufluß blockiert wird. Eine solche Abdichtung kann praktisch nicht mehr rückgängig gemacht werden.

Es wurden daher verstärkte Anstrengungen unternommen, Verfahren zu entwickeln, die den Wasserzufluß stärker als den Ölzufluß hemmen, was gemäß oben angeführter Gleichung (1) bedeutet, daß die effektive Permeabilität für Wasser, $k_{eff\,w}$, stärker reduziert wird als die effektive Permeabilität für Öl, $k_{eff\,o}$. In der US-A-3 308 885 wird für diese Anwendung die Injektion von wasserlöslichen, partiell hydrolisierten, hochmolekularen Polyacrylamiden empfohlen.

Die DE-A-23 58 350 beschreibt die Anwendung einer Mischung aus einem Kohlenwasserstofflösungsmittel, kolloidalem Siliziumdioxid, einem höhermolekularen Polymer, wie partiell hydrolisiertes Polyacrylamid, einer oberflächenaktiven Substanz und Wasser.

Nach der US-A-3 032 499 werden die wasserführenden Schichten durch Injektion einer Kohlenwasserstofflösung eines Säureadditionszusatzes eines N-Alkylalkylenpolyamins selektiv blockiert.

Schließlich empfiehlt die US-A-3 721 295 den Einsatz von Wasser-in-Öl-Emulsionen mit fein verteilten wasserlöslichen Vinyl-Additionspolymeren.

Trotz intensiver Anstrengungen auf dem Gebiet der Wasserabsperrung hat sich in der Praxis keines der zitierten Verfahren uneingeschränkt bewährt, teils weil die aufgetretenen Wasserabsperreffekte quantitativ zu unbedeutend, teils auch weil die vorgeschlagenen Verfahren in der Praxis zu schwierig durchzuführen bzw. auch zu teuer waren. Es bestand daher die Aufgabe, ein Verfahren zur Verfügung zu stellen, das in allen drei oben erläuterten Fällen des Wasserzuflusses anwendbar, einfach durchzuführen und nicht zu kostspielig ist.

In Lösung der gestellten Aufgabe wird ein Verfahren bereitgestellt, das dadurch gekennzeichnet ist, daß eine wäßrige Lösung von Alginaten mit einer Alginatkonzentration von 0,1 bis 8 g/l, die ggf. Mittel zur Verzögerung oder Beschleunigung der Gelbildung des Alginats enthält, sowohl in die wasser- als auch in die ölführenden Schichten der Lagerstätte injiziert wird.

Vorzugsweise wird eine Alginatlösung mit einer Konzentration von 0,5 bis 5 g/l injiziert.

Gemäß einer Ausführungsform der Erfindung wird eine Alginatlösung in Lagerstätten injiziert, die als Mittel zur Verzögerung der Gelbildung Chemikalien enthält, die mit mehrwertigen Kationen Chelate bilden. Als solche Mittel zur Verzögerung der Gelbildung können komplexes Phosphat, insbesondere Natriumhexametaphosphat oder Natriumtripolyphosphat, insbesondere in einer Konzentration von 0,1 bis 10 g/l und bevorzugt 0,5 bis 2 g/l, eingesetzt werden.

Die Behandlung mit Alginatlösung wird vorzugsweise in mehreren Schritten durchgeführt, indem alternierend mit der Alginatlösung Salzwasser injiziert wird, das mindestens 2 g/l mehrwertige Ionen enthält. So können die Alginatlösungen und die mehrwertige Kationen enthaltenden Salzlösungen durch einen Puffer von Wasser oder Salzwasser mit nur einwertigen Kationen voneinander getrennt injiziert werden. Nach einer weiteren Ausführungsform wird eine Lösung von Natriumalginat, Salzwasser mit nur einwertigen Kationen und Salzwasser, das mindestens 2 g/l mehrwertige Ionen enthält, alternierend in die Lagerstätte injiziert.

Alginate sind aus Algen gewonnene Alkalisalze von Alginsäure, einem linearen Copolymer aus D-Manuronsäure und L-Guluronsäure mit Molekulargewichten etwa zwischen 30 000 und 150 000 g/Mol.

Die wäßrigen Lösungen der Natriumalginate sind bei Konzentrationen bis 8 g/l und insbesondere unter 5 g/l noch relativ niedrigviskos und lassen sich auch in Lagerstätten mit niedriger Permeabilität einwandfrei injizieren. Durch Vernetzung mit mehrwertigen Kationen bilden Alginate Gele. Dieses Verhalten kann in Formationen ausgenutzt werden, deren Wässer außer Alkalisalzen auch einen gewissen Gehalt an Erdalkaliionen wie Calcium- oder Magnesiumionen aufweisen. In Zentraleuropa stammt der größte Teil der Erdölfelder aus dem Mesozoikum (Valendis, Wealden, Dogger, Lias), wobei die Lagerstättenwässer einen Gehalt an Erdalkaliionen von über 5 g/l aufweisen, manchmal auch noch wesentlich darüber. Dieser Gehalt reicht aus, um die in niedrigviskoser Form in die Lagerstätte injizierten Alginatlösungen in Kontakt mit diesem Wasser zu vernetzen, wodurch die Fließbehinderung für Wasser verursacht wird. In Kontakt mit Rohöl erfolgt eine Vernetzung dagegen nicht.

Zur Verzögerung der Gelbildung können der Alginatlösung Chemikalien zugesetzt werden, die gegenüber den mehrwertigen Ionen chelatbildend wirken. In der Praxis wird man aus Kostengründen beispielsweise komplexe Phosphate wie Natriumhexametaphosphat oder Natriumtripolyphosphat verwenden. Es wären aber auch andere Chelatbildner wie beispielsweise Nitrilotriessigsäure oder deren Salze, Ethylendiamintetraessigsäure und deren Salze sowie im wesentlichen die ganze Palette der dem Fachmann bekannten Chelatbildner in dieser Anwendung geeignet.

Es ist bereits bekannt, Bodenwasser-Absperrungen selektiv, d. h. getrennt von den Öl führenden Schichten, durchzuführen.

Gemäß der DE-B-10 25 806 werden Salze der Alginsäure und/oder hochpolymere Polyacrylate mit wasserlöslichem Harnstoff-Formaldehyd-Kondensat zur vollständigen Abdichtung und Verfestigung der Lagerstättenbereiche injiziert.

Gemäß der US-A-3 208 524 wird zur Vermeidung der Verluste von Bohrspülmitteln beim Abteufen einer Bohrung ein Gel in die klüftigen oder hochdurchlässigen Bohrlochpartien injiziert, wobei das Gel aus Polysacchariden oder auch aus Alginaten hergestellt werden kann. Als vergelende Komponente wird dort bevorzugt Borat verwendet. Das Gel wird übertage hergestellt. Die injizierten Gele sorgen für eine vollständige Abdichtung des behandelten Bereichs der Lagerstätte. Die Ölförderung wird durch das Verfahren dieser Vorveröffentlichung nicht beeinflußt.

In der US-A-2 211 688 wird ebenfalls die Verwendung von Alginat in einer Bohrspülungsformulierung offenbart, wobei das Alginat die Filterkuchenbildung der Spülung erhöht und die Salztoleranz der Spülung verbessert. Das Verfahren dient auch zur Verfestigung instabiler Formationen und zur zuverlässigen Abdichtung gas- oder wasserführender Horizonte durch vollständige Blockierung der Zuflußkanäle gegenüber den ölführenden Horizonten. Es kommen dort Packer oder andere geeignete technische Maßnahmen zur Anwendung, um die Behandlungsflüssigkeit allein in die abzudichtenden Horizonte zu injizieren.

Man kann somit nach dem bekannten Stand der Technik beispielsweise für den oben angeführten Fall 1 Alginatlösungen recht hoher Konzentration - bis zu 20 g/l und höher - einsetzen, die zwar höhere Viskositäten (bis 100 mPa.s und höher) aufweisen, aber auch praktisch wasserundurchlässige und dauerhafte Gele bilden. Zur Vernetzung, besonders bei relativ weichem Formationswasser, kann Calciumchloridlösung vorweg und/oder auch alternierend mit Alginatlösung verpumpt werden. Um größere Eindringtiefen zu erreichen, kann man Puffer von nicht vernetzendem Wasser zwischen Alginatlösung und vernetzendem Wasser injizieren.

In fast allen Erdöllagerstätten ist neben dem Rohöl auch Haftwasser vorhanden, meist zwischen 10 und 20 % des Porenvolumens. Das Alginat reagiert dann auch mit den vernetzenden Ionen des Haftwassers. Es bildet sich ein Gelbelag auf der Gesteinsoberfläche, wodurch die effektive Permeabilität für Öl vermindert werden kann. Bei Injektion der Alginatlösung außer in die wasserführenden Schichten gleichzeitig auch in die ölführenden Schichten muß eine gewisse Verringerung der effektiven Ölpermeabilität in. Kauf genommen werden, die aber überraschend gering ist, wie an Hand der nachfolgend angeführten Laborversuche noch gezeigt wird. Es kommt nur ein Teil der Alginatlösung mit dem Haftwasser in Kontakt und vergelt. Die Hauptmenge der Alginatlösung wird unvergelt zurückgefördert. Die verzögernde Wirkung von Phosphaten ist hierbei von Vorteil. Erfindungsgemäß gelingt es auf Grund dieses Ausflutverhaltens, die Permeabilität in den verwässerten Bereichen wesentlich stärker zu reduzieren und die Alginatlösung tiefer in diese Bereiche hinein zu injizieren als in die ölführenden Bereiche. Hierdurch erhöht sich der Zufluß von Öl infolge des gestiegenen Druckgradienten beträchtlich. Man kann daher damit rechnen, daß der Ölgehalt des Nassöls bei der Radialströmung zu den Fördersonden günstiger ist als dies der Änderung des Mobilitätsverhältnisses entspricht.

In der Praxis wird man zur Erreichung dieses Effektes versuchen, die Konzentration des Alginates so vorzuwählen, daß die Viskosität der Lösung deutlich über der von Wasser und deutlich unter der des Rohöls liegt. Für eine erfolgreiche Anwendung ist es wesentlich, daß die erzeugten Gele im ölführenden Bereich nicht zu stark sind. Deshalb sind für die Behandlungen Alginatkonzentrationen $\leqslant$ 5 g/l von besonderem Vorteil.

Unter Umständen kann es günstig sein, dem Alginat ein Alkalisalz zuzumischen, wodurch bei vorgegebener Konzentration die Viskosität der Lösung erniedrigt wird. In Tabelle I sind Viskositäten des Natrium-Alginats PROTANAL®LF (50 cps), hergestellt von der Firma Protan & Fagertun A.S., Drammen/Norwegen, als Funktion der Konzentration für Süßwasser und 2 %ige Kaliumchloridlösung als Anmischwasser bei 2 Temperaturen und dem Schergefälle 10 s⁻¹ angegeben.

**Tabelle I**
Viskositäten von PROTANAL®LF (50 cps), als Funktion der Temperatur, des Anmischwassers und der Konzentration, Schergefälle 10 s⁻¹

| Konzentration (kg/m³) | Viskosität (mPa.s) bei 25°C | | bei 60°C | |
| --- | --- | --- | --- | --- |
| | Anmischwasser | | | |
| | Süßwasser | 20 gl/l KCl Wasser | Süßwasser | 20 g/l KCl Wasser |
| 1 | 2,9 | 1,5 | 1,5 | 0,8 |
| 2 | 4,3 | 2,2 | 2,2 | 1,1 |
| 3 | 5,8 | 2,9 | 2,8 | 1,5 |
| 5 | 9,5 | 5,5 | 4,5 | 2,6 |
| 10 | - | 19,9 | - | 7,9 |
| 20 | - | 134 | - | 46 |

In den folgenden Versuchen wurde der Einfluß der Alginatbehandlung auf die effektiven Öl- und Wasserpermeabilitäten und damit auf das Mobilitätsverhältnis untersucht. Lineare Packungen von Sand bzw. zerriebenem Kernmaterial wurden mit Doggerwasser als Haftwasser befüllt und dann mit Öl verschiedener Viskosität geflutet. Nach Erreichen des nicht reduzierbaren Wassergehaltes wurde die effektive Ölpermeabilität $k_1$ eff o gemessen. Anschließend wurde das Öl mit Doggerwasser ausgeflutet und die effektive Wasserpermeabilität $k_1$ eff w gemessen. Das Doggerwasser hatte einen Gesamtsalzgehalt von 176 g/l und einen Ca- bzw. Mg-Gehalt von 4,5 g/l bzw. 0,9 g/l. Nach Bestimmung der effektiven Permeabilitäten wurden die Packungen bei typischen Lagerstättentemperaturen mit Natrium-Alginat-Lösungen verschiedener Konzentration, zum Teil mit Natriumhexametaphosphat versetzt, geflutet und anschließend die effektive Wasser- und Ölpermeabilität $k_2$ eff w und $k_2$ eff o erneut bestimmt.

Die charakteristischen Daten sind in Tabelle II zusammengestellt. Die Permeabilitäten sind in $\mu m^2$ (Darcy) angegeben. Versuch 1 diente als Prototyp zum völligen Absperren des Bodenwassers. Durch die Behandlung wurde die effektive Wasserpermeabilität praktisch auf Null reduziert. Für die weiteren Versuche unter verschiedenen Bedingungen sind die Mobilitätsverhältnisse $M_1$ vor und $M_2$ nach der Alginatbehandlung sowie die dazugehörigen effektiven Wasser- und Ölpermeabilitäten angegeben. Es zeigt sich überraschend, daß durch die Alginatbehandlung die effektive Wasserpermeabilität wesentlich stärker reduziert wird als die effektive Ölpermeabilität, daß also eine selektive Wasserabsperrung stattgefunden hat. Beispielsweise wird im Versuch Nr. 4 die effektive Wasserpermeabilität durch die Behandlung um den Faktor 10,4 reduziert, die effektive Ölpermeabilität aber nur um den Faktor 1,8. Entsprechend wird das Mobilitätsverhältnis in diesem Versuch vor und nach Behandlung mit der Alginatlösung um den Faktor 5,78 verbessert.

**Tabelle II**

Ergebnisse der Wasserabsperrung an linearen Flutrohren

| Versuch Nr. | Temp. °C | Alginat- konz. (g/l) | Phosphat- konz. (g/l) | Viskositäten Wasser (mPa.s) | Öl | vor Behandlung $k_1$ eff w ($\mu m^2$) | $k_1$ eff o | $M_1$ | nach Behandlung $k_2$ eff w ($pm^2$) | ($\mu m^2$) $k_2$ eff o | $M_2$ | $M_1/M_2$ |
|---|---|---|---|---|---|---|---|---|---|---|---|---|
| 1 (V) | 60 | 20 | - | 0,700 | 2,44 | 1,7 | 4,1 | 1,45 | 0 | - | - | - |
| 2 | 47 | 0,5 | - | 0,835 | 3,24 | 1,68 | 4,3 | 1,52 | 0,37 | 1,96 | 0,73 | 2,07 |
| 3 | 47 | 1 | 1 | 0,835 | 3,24 | 0,75 | 5,06 | 0,58 | 0,094 | 1,72 | 0,21 | 2,71 |
| 4 | 58 | 3 | 1 | 0,845 | 2,48 | 0,26 | 0,45 | 1,92 | 0,025 | 0,25 | 0,33 | 5,78 |
| 5 | 58 | 3 | 1 | 0,745 | 2,48 | 1,44 | 3,46 | 1,38 | 0,051 | 0,70 | 0,24 | 5,71 |
| 6 | 58 | 3 | - | 0,745 | 2,98 | 0,145 | 0,294 | 1,97 | 0,015 | 0,117 | 0,51 | 3,85 |
| 7 | 60 | 1 | - | 0,700 | 2,50 | 2,62 | 6,11 | 1,53 | 0,19 | 1,69 | 0,40 | 3,81 |

(V) Vergleichsversuch

In der Praxis wird man die Alginatlösungsmenge so auswählen, daß ein Radius von etwa 0,5 bis 5 m, und bevorzugt von etwa 1 bis 3 m, um die Bohrung von der Behandlungsflüssigkeit erfaßt wird. Das Alginat muß durch ein geeignetes Bakterizid vor bakterieller Zersetzung geschützt werden.

## Patentansprüche

1. Verfahren zur Verminderung des Wasserzuflusses in Erdöl fördernden Sonden einer Erdöllagerstätte, bei dem eine wäßrige Lösung von Alginaten in die wasserführenden Schichten der Lagerstätte injiziert wird,
dadurch gekennzeichnet,
daß eine wäßrige Lösung von Alginaten mit einer Alginatkonzentration von 0,1 bis 8 g/l sowohl in die wasser- als auch in die ölführenden Schichten der Lagerstätte injiziert wird.

2. Verfahren nach Anspruch 1,
dadurch gekennzeichnet,
daß eine Alginatlösung mit einer Konzentration von 0,5 bis 5 g/l injiziert wird.

3. Verfahren nach ansprüch 1 oder Anspruch 2,
dadurch gekennzeichnet,
daß die wäßrige Lösung zusätzlich Mittel zur Verzögerung oder Beschleunigung der Gelbildung der Alginate enthält.

4. Verfahren nach einem der Ansprüche 1 bis 3,
dadurch gekennzeichnet,
daß eine Alginatlösung in Lagerstätten injiziert wird, die als Mittel zur Verzögerung der Gelbildung Mittel enthält, die mit mehrwertigen Kationen Chelate bilden.

5. Verfahren nach Anspruch 4,
dadurch gekennzeichnet,
daß eine Alginatlösung in Lagerstätten injiziert wird, die als Mittel zur Verzögerung der Gelbildung ein komplexes Phosphat, insbesondere Natriumhexametaphosphat oder Natriumtripolyphosphat enthält.

6. Verfahren nach Anspruch 5,
dadurch gekennzeichnet,
daß eine Alginatlösung injiziert wird, die die komplexen Phosphate in einer Konzentration von 0,1 bis 10 g/l und bevorzugt 0,5 bis 2 g/l enthält.

7. Verfahren nach einem der vorhergehenden Ansprüche,
dadurch gekennzeichnet,
daß die Behandlung der Lagerstätte mit Alginatlösung in mehreren Schritten erfolgt, indem alternierend mit der Alginatlösung Salzwasser injiziert wird, das mindestens 2 g/l mehrwertige Ionen enthält.

8. Verfahren nach Anspruch 7,
dadurch gekennzeichnet,
daß die Alginatlösungen und die mehrwertige Kationen enthaltenden Salzlösungen durch einen Puffer von Wasser oder Salzwasser mit nur einwertigen Kationen voneinander getrennt injiziert werden.

9. Verfahren nach Anspruch 7,
dadurch gekennzeichnet,
daß Lösungen von Natriumalginat, Salzwasser mit nur einwertigen Kationen und Salzwasser, das mindestens 2 g/l mehrwertige Ionen enthält, alternierend in die Lagerstätte injiziert werden.

**0 134 021**

## Claims

1. Method of reducing the inflow of water in petroleum producing wells of an oil deposit by injecting an aqueous solution of alginates into the water-bearing layers of the deposit, characterized in that an aqueous solution of alginates having an alginate concentration of from 0.1 to 8 g/l is injected into the water-bearing as well as into the oil-bearing layers of the deposit.

2. Method of claim 1, characterized in that an alginate solution having a concentration of from 0.5 to 5 g/l is injected.

3. Method of claim 1 or claim 2, characterized in that the aqueous solution additionally contains agents for decelerating or accelerating the gelling of the alginate.

4. Method of any of claims 1 to 3, characterized in that an alginate solution is injected into deposits, said alginate solution containing as the agent for decelerating gelling agents which form chelats with multivalent cations.

5. Method of claim 4, characterized in that an alginate solution is injected into deposits, said alginate solution containing as the agent for decelerating gelling a complex phosphate, especially sodium hexametaphosphate or sodium tripolyphosphate.

6. Method of claim 5, characterized in that an alginate solution is injected which contains the complex phosphates at a concentration of from 0.1 to 10 g/l, preferably of from 0.5 to 2 g/l.

7. Method of any of the preceding claims, characterized in that the treatment of the deposit with alginate solution is performed in several steps by injecting, alternatingly with the alginate solution, saline water containing at least 2 g/l of multivalent ions.

8. Method of claim 7, characterized in that the alginate solutions and the saline solutions containing multivalent cations are injected while being separated from one another by a buffer consisting of water or saline water containing merely monovalent cations.

9. Method of claim 7, characterized in that solutions of sodium alginate, saline water containing only monovalent cations, and saline water containing at least 2 g/l of multivalent ions, are alternatingly injected into the deposit.

## Revendications

1. Procédé pour réduire l'afflux d'eau dans les puits producteurs d'un gisement de pétrole, dans lequel une solution aqueuse d'alginates est injectée dans les couches aquifères du gisement, caractérisé en ce qu'on injecte une solution aqueuse d'alginates ayant une teneur en alginates de 0,1 à 8 g/l, tant dans les couches aquifères que dans les couches pétrolifères du gisement.

2. Procéde suivant la revendication 1, caractérisé en ce qu'on injecte une solution d'alginates ayant une concentration de 0,5 à 5 g/l.

3. Procédé suivant la revendication 1 ou la revendication 2, caractérisé en ce que la solution aqueuse contient en outre des agents de retardement ou d'accélération de la gélification des alginates.

4. Procédé suivant l'une des revendications 1 à 3, caractérisé en ce qu'on injecte dans des gisements une solution d'alginates qui contient comme agents de retardement de la gélification des agents qui forment des chélates avec des cations polyvalents.

5. Procédé suivant la revendication 4, caractérisé en ce qu'on injecte dans des gisements une solution d'alginates qui contient comme agent de retardement de la gélification un phosphate complexe, notamment l'hexamétaphosphate de sodium ou le tripolyphosphate de sodium.

6. Procédé suivant la revendication 5, caractérisé en ce qu'on injecte une solution d'alginates qui contient les phosphates complexes à une concentration de 0,1 à 10 g/l et de préférence de 0,5 à 2 g/l.

7. Procédé suivant l'une des revendications précédentes, caractérisé en ce que le traitement des gisements avec la solution d'alginates est conduit en plusieurs étapes, de sorte qu'on injecte en alternance avec la solution d'alginates une eau salée qui contient au moins 2 g/l d'ions polyvalents.

8. Procédé suivant la revendication 7, caractérisé en ce que les solutions d'alginates et les solutions de sels contenant des cations polyvalents sont injectées séparément les unes des autres par un tampon d'eau ou d'eau salée ne contenant que des cations monovalents.

9. Procédé suivant la revendication 7, caractérisé en ce que les solutions d'alginate de sodium, d'eau salée ne contenant que des cations monovalents et d'eau salée qui contient au moins 2 g/l d'ions polyvalents, sont injectées en alternance dans les gisements.

6